# EUROPÄISCHE PATENTSCHRIFT

(11) **EP 0 503 394 B1**
(45) Veröffentlichungstag und Bekanntmachung des Hinweises auf die Patenterteilung: **20.08.1997**
(21) Anmeldenummer: 92103413.8
(22) Anmeldetag: 28.02.1992
(51) Int. Cl.: C08G 65/20

(54) **Verfahren zur Herstellung von Polyoxyalkylenglykol-Monoestern von Monocarbonsäuren**
Process for preparing polyoxyalkyleneglycole monoesters of monocarboxylic acids
Procédé pour la préparation de (monoesters de polyoxyalkylèneglycol) d'acides monocarboxyliques

(30) Priorität: 13.03.1991 DE 4108046
(43) Veröffentlichungstag der Anmeldung: 16.09.1992
(73) Patentinhaber: BASF Aktiengesellschaft, 67063 Ludwigshafen (DE)
(72) Erfinder: Weyer, Hans-Jürgen, Dr., W-6800 Mannheim 1 (DE); Fischer, Rolf, Dr., W-6900 Heidelberg (DE); Jeschek, Gerhard, Dr., W-6718 Grünstadt (DE); Müller, Herbert, Dr., W-6710 Frankenthal (DE)

(56) Entgegenhaltungen:
- EP-A- 239 787
- EP-A- 0 003 112
- US-A- 4 482 411
- US-A- 4 658 065
- PATENT ABSTRACTS OF JAPAN vol. 7, no. 175 (C-179)3. M rz 1983
- DATABASE WPIL Week 8720, Derwent Publications Ltd., London, GB; AN 87-139977
- DIE MAKROMOLEKULARE CHEMIE, 190, Nr.5, Seiten 929-938

## Beschreibung

Die vorliegende Erfindung betrifft ein Verfahren zur Herstellung von Polyoxyalkylenglykol-Monoestern von Monocarbonsäuren.

Polyoxyalkylenglykol-Monoester von Carbonsäuren auf der Basis von Tetrahydrofuran (THF), im folgenden als Poly-THF-Monoester bezeichnet, werden gemäß EP-A 286 454 hergestellt, indem man THF durch eine Lewis- bzw. Brönsted-Säure-katalysierte Ringöffnungspolymerisation zu Polyoxybutylenglykol, auch Polytetrahydrofuran(Poly-THF) genannt, polymerisiert und die Polymerisation durch die Zugabe eines Carbonsäurehalogenids und anschließende hydrolytische Aufarbeitung des Reaktionsgemisches oder durch die Zugabe eines Carbonsäuresalzes, unter Bildung des Poly-THF-Monoesters abbricht. Da bei diesem Verfahren sehr starke und hochkorrosive Lewis- oder Brönsted-Säure-Katalysatoren, wie Antimonhexafluorid, Silberantimonhexafluorid, Silbertetrafluoroborat oder Trifluormethansulfonsäure, angewandt werden müssen, welche wiederum die Verwendung besonders korrosionsbeständiger Spezialwerkstoffe erfordern, entsteht bei diesem Verfahren ein hoher apparativer Aufwand. Abgesehen davon erhält man bei dieser Herstellungsmethode stark polydisperse Poly-THF-Monoester, d.h., die so erhaltenen Poly-THF-Monoester haben eine breite Molekulargewichtsverteilung. In der Regel sind aber Poly-THF-Monoester mit einer möglichst engen Molekulargewichtsverteilung erwünscht. Darüber hinaus ist die Verwertbarkeit der so erhaltenen Poly-THF-Monoester infolge ihrer hohen Farbzahl je nach Art ihrer Verwendung stark eingeschränkt.

JP-A 83 028/1983 lehrt die Polymerisation von THF in Gegenwart eines Carbonsäurehalogenids oder Carbonsäureanhydrids, wobei eine Heteropolysäure als Katalysator unter wasserfreien Bedingungen benutzt wird. Dabei entstehen jedoch Poly-THF-Diester, welche nicht selektiv in die entsprechenden Monoester umgewandelt werden können und aus diesem Grunde vollständig zu Poly-THF hydrolysiert werden.

EP-A-239 787 beschreibt die Herstellung von Polyoxyalkylenglykol halbestern mit enger Molekulargewichtsverteilung und niedriger Farbzahl durch Polymerisation von THF in Gegenwart von Carbonsäuren an festen Bleicherde- oder Zeolith-Katalysatoren, die einen Wassergehalt von unter 0.5 Gew. % aufweisen.

US-A-4 658 065 beschreibt ein Verfahren zur Herstellung von Polyoxyalkylenglykolen in Gegenwart wasserhaltiger Heteropolysäure-Katalysatoren. Die Polymerisation kann in einem Zweiphasensystem durchgeführt werden, wenn ein definierter Wassergehalt der Katalysatorphase vorliegt.

Aufgabe der vorliegenden Erfindung war es, Poly-THF-Monoester mit einer engen Molekulargewichtsverteilung und einer niedrigen Farbzahl, selektiv und wirtschaftlich, auf direktem Wege, also in einer Reaktionsstufe, aus den Monomeren herzustellen.

Dementsprechend wurde ein Verfahren zur Herstellung von Polyoxyalkylenglykol-Monoestern von Carbonsäuren mit mittleren Molmassen von 500 bis 3500 Dalton gefunden, daß dadurch gekennzeichnet ist, daß man Tetrahydrofuran oder Mischungen von Tetrahydrofuran mit insgesamt bis zu 95 mol-%, bezogen auf die eingesetzte Menge an THF, eines oder mehrerer Comonomerer aus der Gruppe der cyclischen Ether und Acetale in Abwesenheit von Wasser und in Gegenwart einer Monocarbonsäure und eines wasserfreien Heteropolysäure-Katalysators in einem homogenen flüssigen Zweiphasensystem polymerisiert.

Erfindungsgemäß werden nach dem vorliegenden Verfahren Polyoxyalkylenglykol-Monoester von Carbonsäuren auf der Basis von Polyoxybutylenglykol hergestellt, d.h., der Polyoxyalkylenglykolrest der Polyoxyalkylenglykol-Monoester kann ausschließlich aus Poly-THF bestehen, er kann aber auch noch zusätzlich aus comonomeren Bausteinen aus der Gruppe der cyclischen Ether und Acetale aufgebaut sein.

Als comonomere cyclische Ether und Acetale werden zweckmäßigerweise 3, 4, 5, 6 und/oder 7-gliedrige cyclische Ether und/oder Acetale im erfindungsgemäßen Polymerisationsverfahren eingesetzt. Es können aber auch höhergliedrigere, cyclische Ether, wie bicyclische Ether, Kronenether oder oligomere cyclische Ether aus Oxybutylen-Einheiten, also cyclische Oligomere des THF's verwendet werden. Als Beispiele für solche comonomeren cyclischen Ether und Acetale seien die folgenden Verbindungen genannt: Ethylenoxid, Propylenoxid, Isobutylenoxid, Epichlorhydrin, Oxetan, 3,3-Dimethyloxetan, 3,3-Bis-chlormethyloxetan, Methyltetrahydrofurane, 1,3-Dioxolan, Tetrahydropyran, Dioxane, Trioxan, Oxepan.

Im allgemeinen werden die Comonomeren in Mengen von insgesamt bis zu 95 mol-%, bevorzugt von 0,1 bis 70 mol-%, insbesondere von 1 bis 30 mol-%, bezogen auf eingesetztes Tetrahydrofuran verwendet. Besonders bevorzugt werden nach dem erfindungsgemäßen Verfahren Poly-THF-Monoester von Carbonsäuren allein aus dem Monomeren THF hergestellt.

Die erfindungsgemäße Polymerisation wird durch Heteropolysäuren katalysiert.

Als Heteropolysäuren im Sinne der vorliegenden Erfindung werden anorganische Polysäuren mit mindestens zwei verschiedenen Zentralatomen verstanden, welche aus schwachen, mehrbasischen Sauerstoffsäuren eines Metalls, vorzugsweise aus denen des Chroms, Molybdäns, Vanadiums und Wolframs und/oder den entsprechenden Oxiden dieser Metalle CrO₃, MoO₃, V₂O₅ bzw. WO₃, und denen eines anderen Metalls oder Nichtmetalls, beispielsweise Arsen, Bor, Jod, Phosphor, Selen, Silicium, Germanium oder Tellur als gemischte, partielle Anhydride entstehen. In der Regel hat das Atomverhältnis zwischen den erstgenannten und den letztgenannten Elementen in diesen Heteropolysäuren den Wert 2,5 bis 12, vorzugsweise beträgt das Atomverhältnis 9 oder 12.

Als Heteropolysäuren, welche im erfindungsgemäßen Verfahren Einsatz finden können, seien die folgenden Verbindungen beispielhaft genannt:
Dodecamolybdatophosphorsäure (H₃PMo₁₂O₄₀ · nH₂O),
Dodecamolybdatokieselsäure (H₄SiMo₁₂O₄₀ · nH₂O),
Dodecamolybdatocer (IV)-Säure (H₈CeMo₁₂O₄₂ · nH₂O),
Dodecamolybdatoarsen (V)-Säure (H₃AsMo₁₂O₄₀ · nH₂O),
Hexamolybdatochrom (III)-Säure (H₃CrMo₆O₂₄H₆ · nH₂O),
Hexamolybdatonickel (II)-Säure (H₄NiMo₆O₂₄H₆ · 5H₂O),
Hexamolybdatojodsäure (H₅JMo₆O₂₄ · nH₂O),
Octadecamolybdatodiphosphorsäure (H₆P₂Mo₁₈O₆₂ · 11H₂O),
Octadecamolybdatodiarsen (V)-Säure (H₆As₂Mo₁₈O₆₂ · 25H₂O),
Nonamolybdatomangan (IV)-Säure (H₆MnMo₉O₃₂ · nH₂O),
Undecamolybdatovanadatophosphorsäure (H₄PMo₁₁VO₄₀ · nH₂O),
Decamolybdatodivanadatophosphorsäure (H₅PMo₁₀V₂O₄₀ · nH₂O),
Dodecavanadatophosphorsäure (H₇PV₁₂O₃₆ · nH₂O),
Dodecawolframatokieselsäure (H₄SiW₁₂O₄₀ · 7H₂O),
Dodecawolframatophosphorsäure (H₃PW₁₂O₄₀ · nH₂O),
Dodecawolframatoborsäure (H₅BW₁₂O₄₀ · nH₂O),
Octadecawolframatodiphosphorsäure (H₆P₂W₁₈O₆₂ · 14H₂O),
Octadecawolframatodiarsen (V)-Säure (H₆As₂W₁₈O₆₂ · 14H₂O),
Hexamolybdatohexawolframatophosphorsäure (H₃PMo₆W₆O₄₀ · nH₂O).

Selbstverständlich können auch Mischungen von Heteropolysäuren eingesetzt werden. Vorzugsweise werden im erfindungsgemäßen Verfahren aufgrund ihrer guten Verfügbarkeit Dodecawolframatophosphorsäure, Dodecawolframatokieselsäure, Dodecamolybdatophosphorsäure, Nonamolybdatophosphorsäure und Dodecamolybdatokieselsäure eingesetzt.

Bevorzugt werden die freien Heteropolysäuren erfindungsgemäß angewandt, es ist aber auch möglich, deren Salze, insbesondere deren Alkalimetall- und Erdalkalimetallsalze als Katalysatoren zu benutzen. Die Heteropolysäuren und deren Salze sind bekannte Verbindungen und können nach bekannten Verfahren, beispielsweise nach den Methoden von Brauer (Herausgeber): Handbuch der Präparativen Anorganischen Chemie, Band III, S. 1774-1798, Enke, Stuttgart, 1981 oder nach den Verfahren von Top. Curr. Chem. 76, 1 (1978), hergestellt werden.

Die so hergestellten Heteropolysäuren liegen in hydratisierter Form vor und werden vor ihrer Verwendung im erfindungsgemäßen Verfahren vom darin enthaltenen, koordinativ gebundenen Wasser befreit. Diese Dehydratisierung kann vorteilhaft thermisch, beispielsweise nach dem Verfahren von Makromol. Chem. 190, 929 (1989) durchgeführt werden. Eine andere Möglichkeit zur Dehydratisierung der Heteropolysäuren besteht je nach verwendeter Heteropolysäure darin, daß man die Heteropolysäure in einem organischen Lösungsmittel, beispielsweise in einem Dialkylether oder Alkohol löst, das Wasser mit dem organischen Lösungsmittel aus seiner koordinativen Bindung mit der Heteropolysäure verdrängt und azeotrop mit dem Lösungsmittel auskreist. Nach diesen Methoden hergestellte, wasserfreie Heteropolysäuren können als Katalysator direkt in das erfindungsgemäße Verfahren eingeführt werden.

Die Heteropolysäure-Katalysatoren können auch als Heterogenkatalysatoren im erfindungsgemßen Verfahren verwendet werden. Dazu wird zweckmäßigerweise die Heteropolysäure auf ein unter den Reaktionsbedingungen inertes Trägermaterial, wie Aktivkohle, Siliciumdioxid, Titandioxid oder Zirkoniumdioxid, nach an sich herkömmlichen Methoden aufgebracht, beispielsweise in-dem man das betreffende Trägermaterial mit einer Lösung der Heteropolysäure in einem Lösungsmittel, vorzugsweise einem organischen Lösungsmittel, tränkt und anschließend bei Temperaturen von 100 bis 300, vorzugsweise 130 bis 250°C, unter reduziertem Druck trocknet.

Als weitere essentielle Komponente enthält das Reaktionsgemisch zur erfindungsgemäßen Herstellung von Polyoxyalkylenglykol-Monoestern von Carbonsäuren eine Monocarbonsäure.

Im erfindungsgemäßen Verfahren sind prinzipiell alle Arten von Monocarbonsäuren einsetzbar, wie aliphatische, cycloaliphatische, aromatische und araliphatische Carbonsäuren. Diese können weiterhin noch unter den Reaktionsbedingungen inerte Substituenten wie Alkylgruppen, Halogenatome oder Ethergruppen tragen. Desgleichen können vorteilhaft ungesättigte aliphatische oder cycloaliphatische Carbonsäuren umgesetzt werden.

Zweckmäßigerweise werden im erfindungsgemäßen Verfahren jedoch aliphatische C₁- bis C₁₈-Monocarbonsäuren sowie aromatische Monocarbonsäuren, wie Benzoesäure, benutzt. Vorzugsweise werden aliphatische C₁- bis C₈-Monocarbonsäuren sowie Benzoesäure verwendet. Besonders bevorzugt ist die Verwendung von C₁- bis C₄-Monocarbonsäuren, wie Ameisensäure, Essigsäure, Propionsäure, Buttersäure, Pivalinsäure, Acrylsäure oder Methacrylsäure.

Der Carbonsäuregehalt der Reaktionsmischung beeinflußt das mittlere Molekulargewicht des entstehenden Polymerisates. In der Regel gilt, daß je höher der Gehalt an Carbonsäure in der Reaktionsmischung ist, desto niedriger das mittlere Molekulargewicht des entstehenden Polymerisates ausfällt. Dementsprechend nimmt das mittlere Molekulargewicht des erzeugten Polymeren bei abnehmendem Carbonsäuregehalt der Reaktionsmischung zu. Bei sehr geringen Carbonsäuregehalten können sich vermehrt cyclische Oxyalkylenoligomere bilden.

Unter der Bezeichnung "mittleres Molekulargewicht" oder "mittlere Molmasse" wird hier und im folgenden das Zahlenmittel Mₙ des Molekulargewichts der im gebildeten Polymerisat enthaltenen Polymeren verstanden.

Des weiteren beeinflußt der Carbonsäuregehalt der Reaktionsmischung deren Phasenverhalten. Bei hohen Carbonsäuregehalten besteht die Reaktionsmischung aus einer homogenen Phase, weswegen später die Abtrennung des Katalysators bei der Aufarbeitung des Reaktionsgemisches erschwert werden kann. Bei sehr niedrigen Carbonsäuregehalten wird die Heteropolysäure nicht vollständig von der Reaktionsmischung gelöst. Im erfindungsgemäßen Verfahren wird bevorzugt mit solchen Carbonsäuregehalten der Reaktionsmischung gearbeitet, bei denen sich zwei homogene, flüssige Phasen im Reaktionsgemisch bilden, wobei die schwerere, untere Phase den größten Teil des Heteropolysäure-Katalysators und der Carbonsäure neben monomerem Ausgangsmaterial und frisch gebildetem Polymer enthält und wobei die leichtere, obere Phase neben Restmengen an Carbonsäure und Katalysator im wesentlichen aus dem monomeren Ausgangsmaterial und darin gelöstem Polymer zusammengesetzt ist.

Zweckmäßigerweise arbeitet man, insbesondere bei der diskontinuierlichen Ausgestaltung, im erfindungsgemäßen Verfahren mit Carbonsäuregehalten von 0,1 bis 15 Mol, vorteilhaft von 1 bis 8 Mol Carbonsäure pro Mol Heteropolysäure. Da bei der kontinuierlichen Betriebsweise des erfindungsgemäßen Verfahrens ein Teil der in der oberen, produkt- und monomerhaltigen Phase gelösten Carbonsäure laufend, zusammen mit dem Produkt aus dem Reaktor ausgetragen wird, die in der unteren, katalysatorhaltigen Phase befindliche Carbonsäure aber bei der Herstellung des Polyoxyalkylenglykol-Monoesters verbraucht wird, ist es vorteilhaft, die Carbonsäurezufuhr zur Reaktionsmischung zwecks Ergänzung der verbrauchten und ausgetragenen Carbonsäure so zu steuern, daß sich die oben genannten Konzentrationsverhältnisse in der Katalysatorphase einstellen. Unter diesen Bedingungen bildet sich das oben beschriebene Reaktionssystem aus zwei homogenen, flüssigen Phasen aus, in dem Polyoxyalkylenglykol-Monoester praktisch beliebiger mittlerer Molmassen, insbesondere jedoch solche Polyoxyalkylenglykol-Monoester mit den wirtschaftllich besonders wichtigen mittleren Molmassen von 500 bis 3500, gezielt und mit guter Selektivität hergestellt werden können.

Es wurde gefunden, daß es zur Herstellung von Polyoxyalkylenglykol-Monoestern bestimmter mittlerer Molmassen und einer engen Molekulargewichtsverteilung insbesondere beim kontinuierlichen Verfahren vorteilhaft ist, daß die zur Herstellung eines solchen Polymeren erforderliche Carbonsäurekonzentration in der Katalysatorphase soweit als möglich konstant gehalten wird. Es wird daher im kontinuierlichen Verfahren vorteilhaft so vorgegangen, daß die Carbonsäure im Reaktionsgemisch, entsprechend ihrem Verbrauch bei der Umsetzung, unter Berücksichtigung der zusammen mit der produkthaltigen Oberphase ausgetragenen Carbonsäure und unter Berücksichtigung der Verteilung der Carbonsäure zwischen Katalysatorphase und Oberphase, laufend durch Zuführung frischer oder rückgeführter Carbonsäure in der Weise ergänzt wird, daß die Carbonsäurekonzentration in der Katalysatorphase weitgehend konstant gehalten wird. Bei der diskontinuierlichen Ausgestaltung des erfindungsgemäßen Verfahrens wirken sich die oben genannten Faktoren naturgemäß in der Regel nicht so kritisch auf das Verfahrensergebnis aus wie im kontinuierlichen Verfahren.

Allerdings stand bislang kein verläßliches Verfahren zur Verfügung, nach dem die Carbonsäurekonzentration in der konzentrierten, heteropolysäurehaltigen Katalysatorphase gemessen werden konnte, insbesondere gab es kein Meßverfahren nach dem die Carbonsäurekonzentration in dieser Katalysatorphase hinreichend schnell und genau gemessen werden konnte, um die Zufuhr frischer Carbonsäure entsprechend den Anforderungen eines kontinuierlichen, industriellen Verfahrens über eine damit gekoppelte Analogsteuerung regeln zu können.

Es wurde gefunden, daß die Konzentration der Carbonsäure in der Katalysatorphase vorteilhaft durch die Messung der elektrischen Leitfähigkeit der flüssigen Katalysatorphase ermittelt werden kann. Die Messung der elektrischen Leitfähigkeit kann beispielsweise mit Hilfe der Techniken, Schaltungen und Meßanordnungen, wie sie von T. und L. Shedlovsky in A. Weissberger, B.W. Rossiter (Ed.) Techniques of Chemistry, Band I, Seite 163 bis 204, Wiley-Interscience, New York, 1971, beschrieben sind, im erfindungsgemäßen Verfahren durchgeführt werden. Die Konzentration der betreffenden Carbonsäure in der Katalysatorphase läßt sich einfach mit Hilfe des erhaltenen Leitfähigkeitsmeßwertes anhand einer vorher aufgestellten Eichkurve feststellen. In der Regel ist es empfehlenswert, für die unterschiedlichen, angewandten Carbonsäure-Heteropolysäure-Systeme individuelle Eichkurven zu erstellen. Da die Leitfähigkeitsmessung ein elektrisches Meßverfahren ist, kann die Meßeinrichtung sehr einfach mit der Carbonsäuredosiervorrichtung zum Zwecke der Analogsteuerung der Carbonsäurezugabe gekoppelt werden. Dieses kombinierte Meß- und Dosierverfahren wirkt sich insbesondere bei der kontinuierlichen Ausgestaltung des erfindungsgemäßen Verfahrens sehr vorteilhaft auf die Produktqualität aus.

Das Molgewicht des im erfindungsgemäßen Verfahrens gebildeten Polyoxyalkylenglykol-Monoesters ist nicht allein von der Menge des zugesetzten Heteropolysäure-Katalysators und der Carbonsäure abhängig, sondern wird auch von der Art der verwendeten Heteropolysäure bzw. der eingesetzten Carbonsäure beeinflußt.

Beispielsweise wird unter ansonsten gleichen Bedingungen bei der Umsetzung von THF und Ameisensäure mit wasserfreier Dodecawolframatophosphorsäure ein Polymer mit einer mittleren Molmasse von 1500 erhalten, wohingegen bei der Verwendung von Benzoesäure ein Polymer mit einer mittleren Molmasse von 2900 gebildet wird und bei Verwendung von Essigsäure als Carbonsäure zusammen mit Dodecamolybdatophosphorsäure wird ein Poly-THF-Monoacetat der mittleren Molmasse 1800 gewonnen, wohingegen mit Dodecawolframatokieselsäure ein Poly-THF-Monoacetat der mittleren Molmasse 2000 entsteht.

Durch Variierung der Reaktionsparameter Menge, Art der verwendeten Heteropolysäure und Carbonsäure lassen sich so Polyoxyalkylenglykol-Monoester mit einem bestimmten, mittleren Molekulargewicht und gleichzeitig einer relativ engen Molekulargewichtsverteilung maßgeschneidert herstellen. Die Einstellung dieser Verfahrensparameter läßt sich in der Regel mit einigen wenigen Routineversuchen optimal abstimmen.

Das erfindungsgemäße Verfahren kann kontinuierlich oder diskontinuierlich ausgeführt werden. Zweckmäßigerweise wird dazu die Heteropolysäure in Mengen von 10 bis 300 Gew.-Teilen, vorzugsweise von 50 bis 150 Gew.-Teilen, bezogen auf 100 Gew.-Teile des verwendeten Monomerengemischs oder 100 Gew.-Teile Tetrahydrofuran eingesetzt. Es ist auch möglich größere Mengen des Heteropolysäure-Katalysators einzusetzen.

Die Heteropolysäure kann in fester Form der Umsetzung zugeführt werde, worauf sie durch das Inkontaktbringen mit den weiteren Reaktanten nach und nach unter Ausbildung der flüssigen Katalysatorphase solvatisiert wird. Man kann auch so verfahren, daß man die feste Heteropolysäure mit der zu verwendenden Carbonsäure und/oder dem zu verwendenden Monomer anmaischt und die dabei erhaltene Katalysatorlösung als flüssige Katalysatorphase in den Reaktor leitet. Dabei kann sowohl die Katalysatorphase als auch das monomere Ausgangsmaterial im Reaktor vorgelegt werden. Es können aber auch beide Komponenten gleichzeitig in den Reaktor eingeleitet werden.

Die Polymerisation wird üblicherweise bei Temperaturen von 0 bis 150°C, vorzugsweise bei 30 bis 80°C, vorgenommen. Vorzugsweise wird dabei unter Atmosphärendruck gearbeitet, das Arbeiten unter Druck, vornehmlich unter dem Eigendruck des Reaktionssystems, kann sich aber gleichfalls als zweckmäßig und vorteilhaft erweisen. Da die Polymerisation vorzugsweise in einem Zweiphasensystem durchgeführt wird, muß für eine gute Durchmischung der beiden Phasen gesorgt werden. Dazu ist es erforderlich, daß die Reaktoren sowohl bei der chargenweisen als auch bei der kontinuierlichen Verfahrensweise mit leistungsfähigen Mischeinrichtungen, beispielsweise Rührwerken, ausgestattet sind. Beim diskontinuierlichen Verfahren wird dazu in der Regel ein Rührkessel verwendet, wobei die beiden flüssigen Phasen nach beendeter Umsetzung voneinander getrennt werden.

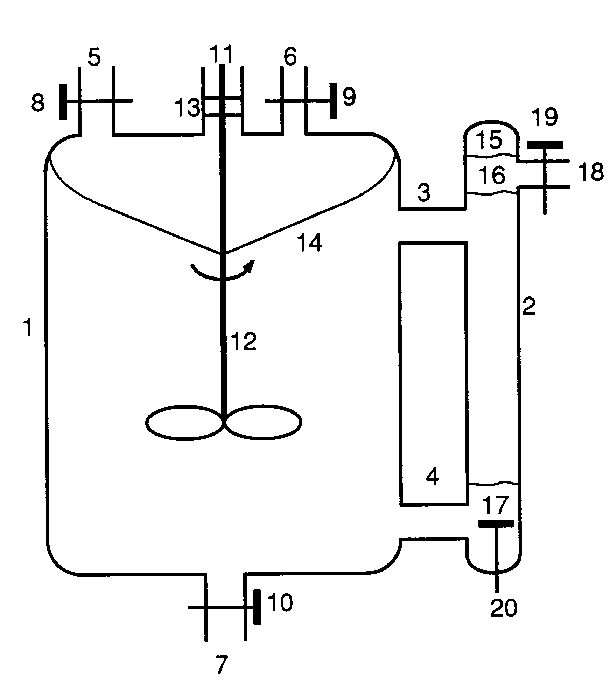

Bevorzugt wird jedoch die kontinuierliche Verfahrensweise angewandt. Dabei kann die Umsetzung in herkömmlichen, für kontinuierliche Verfahren geeigneten Reaktoren oder Reaktoranordnungen, beispielsweise in Rohrreaktoren, welche mit Innenausbauten ausgestattet sind, die eine gute Durchmischung des Zweiphasensystems gewährleisten oder aber auch in Rührkesselkaskaden ausgeführt werden, wobei sich an die Umsetzung noch die kontinuierliche Abscheidung der Katalysatorphase von der monomer- und produkthaltigen Oberphase anschließt. Vorteilhaft wird im erfindungsgemäßen Verfahren eine Apparatur eingesetzt, wie sie in der Figur schematisch dargestellt ist.

Bei dieser Apparatur handelt es sich um einen mit einem Phasenabscheider 2 kombinierten Rührkessel 1 von ansonsten an und für sich herkömmlicher Bauart, der entweder mit Außen- oder Innenheizung ausgerüstet sein kann und der mit in der Regel separaten Einlaßstutzen 5 für die Zuleitung der einzelnen Reaktanten und die Begasung mit Inertgas versehen ist. In der Figur wurde der Übersichtlichkeit wegen auf die Darstellung der Kesselheizung verzichtet und nur ein Einlaßstutzen 5, stellvertretend für alle weiteren, eingezeichnet. Des weiteren sind an den Reaktor eine Vorrichtung zum Druckausgleich 6 und ein Ablaßstutzen 7 angebaut. Alle diese Vorrichtungen sind mit separaten Steuervorrichtungen 8, 9 und 10, beispielsweise Schiebern oder Ventilen, versehen, welche das Öffnen und Schließen dieser Stutzen sowie die Regelung des Zulaufs ermöglichen. Der Reaktor ist mit einem Rührwerk 12 versehen, welches durch die mit der Buchse 13 abgedichtete Führung 11 nach außen verbunden ist. Mit dem Phasenabscheider 2 steht der Rührkessel 1 über die etwa in Höhe des oberen bzw. unteren Drittels angebrachten Zuführungen 3 bzw. 4 in Verbindung. Die bei der Umsetzung erhaltene Produktlösung wird über den Auslaßstutzen 18, welcher zweckmäßigerweise oberhalb der Zuführung 3 angebracht ist, aus der Apparatur abgezogen. Der Abfluß der Produktlösung wird über die Steuervorrichtung 19, die z.B. ein Schieber oder ein Ventil sein kann, geregelt.

Zum Betrieb dieser kontinuierlichen Apparatur werden die Reaktanten im Reaktor vorgelegt und bei der gewünschten Reaktionstemperatur mit dem Rührwerk 12 intensiv durchmischt, wobei eine emulsionsartige Mischung aus Katalysatorphase und Oberphase entsteht. Die durch das Rührwerk im Reaktionsgemisch erzeugte Strömung hat zur Folge, daß die emulsionsartige Mischung über die Zuführung 3 in den Phasenabscheider 2 gelangt, worin sich die Katalysatorphase und die monomer- und produkthaltige Oberphase aufgrund ihrer unterschiedlichen Dichten entmischen. Dabei scheiden sich etwa oberhalb der gestrichelten Linie 16 und unterhalb der gestrichelten Linie 17 aus der trüben, emulsionsartigen Reaktionsmischung die farblose, produkthaltige Oberphase bzw. die je nach verwendeter Heteropolysäure unterschiedlich gefärbte, klare Katalysatorphase ab. Die Produktphase wird über den Auslaß 18 abgezogen, dieweil die Katalysatorphase über die Zuführung 4, infolge des vom Rührwerk 12 erzeugten Sogs, wieder in den Rührkessel zurückfließt und dort erneut mit der monomer- und produkthaltigen Oberphase verwirbelt wird. Die Linien 14 und 15 bezeichnen den ungefähren Flüssigkeitsmeniskus bzw. -pegel in Rührkessel bzw. Phasenabscheider im Betrieb. Über die Einfüllstutzen 5 wird frisches Monomer und frische Carbonsäure in den Rührkessel eingetragen. Dabei wird die Carbonsäurezufuhr mit Hilfe der in die flüssige Katalysatorphase eintauchenden Leitfähigkeitsmeßzelle 20 so gesteuert, daß der gewünschte Carbonsäuregehalt in der Katalysatorphase im Rahmen der Regelgenauigkeit konstant bleibt.

Frisches Monomer wird üblicherweise über eine Füllstandsregelung gesteuert in den Reaktor eindosiert. Zweckmäßigerweise wird frisches Monomer in dem Maße zugeführt, wie Produkt und nicht umgesetztes Monomer aus der Reaktionsapparatur ausgetragen werden. Auf diese Weise kann auch die Reaktionszeit, mithin die Polymerisationszeit, gesteuert werden, womit ein weiteres Mittel zur Beeinflussung und Einstellung des mittleren Molekulargewichtes des entstehenden Polymeren zur Verfügung steht. Im allgemeinen wird die Polymerisation in Abhängigkeit von der Katalysatormenge und der Reaktionstemperatur beim chargenweisen Verfahren während eines Zeitraumes von 0,5 bis 50 Stunden, vorzugsweise von 1 bis 10 Stunden und besonders bevorzugt von 1 bis 8 Stunden durchgeführt. Beim kontinuierlichen Verfahren werden üblicherweise Verweilzeiten von 1 bis 8 und vorzugsweise von 2 bis 5 Stunden eingestellt. Zu Beginn der kontinuierlichen Umsetzung benötigt das beschriebene Reaktionssystem eine gewisse Zeit bis sich ein stationäres Gleichgewicht eingestellt hat und während der es vorteilhaft sein kann, den Auslaß 18 mit Hilfe der Steuervorrichtung 19 geschlossen zu halten, also keine Produktlösung aus der Reaktionsapparatur auszutragen.

Die Katalysatorphase verbleibt in der Reaktionsapparatur und wird entsprechend den Katalysatorverlusten, die durch den Austrag geringer Katalysatormengen mit der produkthaltigen Oberphase entstehen, laufend durch Zufuhr neuen und/oder gegebenenfalls durch die Rückführung des ausgetragenen Katalysators ergänzt.

Wird zur Herstellung der Poly-THF-Monoester ein Heteropolysäure-Heterogenkatalysator verwendet, kann dieser als Suspensionskatalysator, vorzugsweise aber als Festbettkatalysator eingesetzt werden. Bei Anwendung eines Festbettkatalysators kann die Reaktionsmischung in der Sumpf- oder Rieselfahrweise über den Heteropolysäure-Heterogenkatalysator geleitet werden.

Das erfindungsgemäße Verfahren wird vorteilhaft unter einer Inertgasatmosphäre durchgeführt, wobei beliebige Inertgase, wie Stickstoff oder Argon, verwendet werden können. Die Reaktanten werden vor ihrer Verwendung von gegebenenfalls darin enthaltenem Wasser und Peroxiden befreit.

Der Zusatz von unter den Reaktionsbedingungen inerten, organischen Lösungsmitteln, beispielsweise aliphatischen und aromatischen Kohlenwasserstoffen sowie halogenierten Kohlenwasserstoffen ist möglich und kann sich dahingehend vorteilhaft auswirken, daß die Phasentrennung von Katalysator- und Oberphase erleichtert wird. In der Regel dient im erfindungsgemäßen Verfahren das Monomere sowohl als Reaktant als auch als Lösungsmittel.

Die Aufarbeitung der polymerisathaltigen oberen Phase kann z.B. auf die Weise erfolgen, daß man darin enthaltene Heteropolysäure-Spuren durch Zusatz einer Base, wie verdünnten Alkalimetall- oder Erdalkalimetall-Hydroxyden, Ammoniaklösung, Alkalimetall- oder Erdalkalimetallcarbonatlösungen oder -hydrogencarbonatlösungen neutralisiert, daß darin enthaltene Monomer abdestilliert und den im Destillationsrückstand verbliebenen Polyoxyalkylenglykol-Monoester zur Abtrennung ausgefallener Salze filtriert. Das bei der Destillation zurückgewonnene Monomer kann selbstverständlich wieder in die Umsetzung zurückgeführt werden.

Nach dem erfindungsgemäßen Verfahren können Polyoxyalkylenglykol-Monoester von Monocarbonsäuren und insbesondere Poly-THF-Monoester von Monocarbonsäuren wirtschaftlich und in guter Ausbeute, selektiv und mit einer engen Molekulargewichtsverteilung sowie in sehr reiner Form erhalten werden. Die erfindungsgemäß herstellbaren Monoester finden beispielsweise als Weichmacher (US-A 4 482 411), Imprägniermittel (DE-A 29 32 216), Monomere (EP-A 286 454), Emulgatoren und Dispergierhilfsmittel (JP-A 138 452/1987) Verwendung und werden außerdem noch zum Deinken bei der Wiederaufarbeitung von Altpapier (JP-A 303 190/1988) eingesetzt.

### Beispiele

Die mittleren Molmassen (Mₙ) der gemäß den Beispielen hergestellten Polymeren wurden mittels Gelpermeationschromatographie bestimmt, wobei ein standardisiertes Polystyrol zur Eichung verwendet wurde. Aus den erhaltenen Chromatogrammen wurde das Zahlenmittel Mₙ nach der Gleichung Mₙ = Σ cᵢ/Σ cᵢ/Mᵢ berechnet, in der cᵢ für die Konzentration der einzelnen Polymerspezies i im erhaltenen Polymergemisch steht und in der Mᵢ das Molekulargewicht der einzelnen Polymerspezies i bedeutet. Die Molekulargewichtsverteilung, im folgenden als Dispersität D bezeichnet, wurde aus dem Verhältnis von Gewichtsmittel des Molekulargewichts (M_{w}) und Zahlenmittel des Molekulargewichts (Mₙ) nach der Gleichung M_{w}/Mₙ = D errechnet. Das Gewichtsmittel M_{w} wurde aus den erhaltenen Chromatogrammen mit Hilfe der Formel M_{w} = Σ cᵢ·Mᵢ/Σ cᵢ bestimmt, in der cᵢ und Mᵢ die genannte Bedeutung haben.

Die zur Bestimmung der Dispersität herangezogenen Proben waren nicht wie allgemein üblich einer vorherigen Kurzweg-Destillation zur Entfernung flüchtiger, kurzkettiger Polymere unterzogen worden, weshalb ein höherer Wert für D ermittelt wurde, als er nach einer vorausgegangenen Kurzweg-Destillation zu erwarten gewesen wäre.

Alle eingesetzten Reaktanten waren wasser- und peroxidfrei.

### Beispiel 1

50 g wasserfreie Dodecawolframatophosphorsäure wurden in 100 g THF, das 1 Gew.-% Ameisensäure enthielt, gelöst und 4 Stunden bei 60°C in einer Stickstoffatmosphäre gerührt. Nach Abkühlung auf Raumtemperatur wurden die beiden flüssigen Phasen getrennt. Aus der oberen Phase wurden nach Abdestillieren des unumgesetzten THF 12 g eines klaren, farblosen, viskosen Polymeren erhalten. Das erhaltene Poly-THF-Monoformiat hatte ein mittleres Molekulargewicht (Mₙ) von 1500.

### Beispiel 2

50 g wasserfreie Dodecamolybdatophosphorsäure wurden in 100 g trockenem Tetrahydrofuran, das 1,3 Gew.-% Essigsäure enthielt, gelöst und 4 Stunden in einer Stickstoffatmosphäre bei 60°C gerührt. Nach Abkühlung der Reaktionsmischung auf Raumtemperatur wurden die beiden flüssigen Phasen getrennt. Aus der oberen Phase wurden nach Abdestillieren des unumgesetzten THF 12 g eines klaren, farblosen viskosen Polymeren der mittleren Molmasse (Mₙ) 1800 erhalten.

### Beispiel 3

50 g wasserfreie Dodecawolframatophosphorsäure wurden in 100 g trockenem THF, das 2,7 Gew.-% Benzoesäure enthielt, gelöst und 4 Stunden bei 60°C in einer Stickstoffatmosphäre gerührt. Nach Abkühlen auf Raumtemperatur wurden die beiden flüssigen Phasen getrennt. Aus der oberen Phase wurden nach Abdestillieren des unumgesetzten THF 20 g eines klaren, farblosen, viskosen Polymeren der mittleren Molmasse 2900 erhalten. Die Dispersität hatte den Wert 2,0.

### Beispiel 4

500 g wasserfreie Dodecawolframatophosphorsäure wurden in 1000 g trockenem THF, das 3,5 Gew.-% Essigsäure enthielt, gelöst und 4 Stunden bei 60°C unter einer Stickstoffatmosphäre gerührt. Anschließend wurden während 100 Stunden pro Stunde 250 g THF mit einem Gehalt von 3,5 Gew.-% Essigsäure zugeführt und die gleiche Menge an oberer Phase aus dem Reaktor entfernt. Die aus dem Reaktor ausgetragene, produkthaltige Oberphase wurde mit dem gleichen Volumen n-Heptan versetzt, wobei sich flüssige Heteropolysäure abschied. Nachdem sich die beiden Phasen getrennt hatten, wurde die organische Phase über Aktivkohle geleitet und die leicht flüchtigen Bestandteile wie THF, Essigsäure und Heptan im Vakuum abgezogen. Der THF-Umsatz betrug durchschnittlich 22 %. Das entstandene Poly-THF-monoacetat hatte ein mittleres Molekulargewicht Mₙ von 1800, eine Dispersität von 1,7 und eine Farbzahl (APHA) kleiner als 10.

### Beispiel 5

50 g wasserfreie Dodecawolframatophosphorsäure wurden in einer Mischung aus 80 g THF und 20 g 1,4-Dioxan, die 3,6 Gew.-% Essigsäure enthielt, gelöst und 4 Stunden bei 60°C in einer Stickstoffatomosphäre gerührt. Nach Abkühlung auf Raumtemperatur wurden die beiden flüssigen Phasen getrennt. Aus der oberen Phase wurden nach Abdestillieren von nicht umgesetztem THF, 1,4-Dioxan und Essigsäure 24 g eines klaren, viskosen Polymeren erhalten. Das entstandene, copolymere Polyoxyalkylenglykol-Monoacetat hatte ein mittleres Molekulargewicht (Mₙ) von 1400.

### Beispiel 6

Für die Polymerisation wurde ein Trägerkatalysator eingesetzt, der Dodecawolframatophosphorsäure auf Aktivkohle enthielt. Der Katalysator wurde folgendermaßen hergestellt: 150 g nicht getrocknete Dodecawolframatophosphorsäure wurden in 1500 g trockenem THF gelöst, mit 750 g Aktivkohle (Merck, Korngröße 0,5 bis 0,85 mm) versetzt und zwei Stunden bei Raumtemperatur gerührt. Anschließend wurde der Trägerkatalysator abfiltriert und vor Einsatz so lange bei 150°C im Vakuum getrocknet, bis im Katalysator kein Wasser mehr nachweisbar war. Der Trägerkatalysator enthielt 10 Gew.-% H₃PW₁₂O₄₀.

150 g des so hergestellten Katalysators wurden in einem ölbeheizten Doppelmantelrohr als Festbett angeordnet. Über diesen Katalysator wurde eine Mischung von 330 g THF und 6 g Essigsäure bei 60°C für acht Stunden im Kreis gefahren. Danach wurde die flüssige Phase im Vakuum eingeengt. Es verblieb ein klarer, viskoser Rückstand von 8,2 g Poly-THF-Monoacetat.

### Beispiel 7

50 g wasserfreie Dodecawolframatokieselsäure wurden in 100 g trockenem Tetrahydrofuran, das 1,3 Gew.-% Essigsäure enthielt, gelöst und 4 Stunden in einer Stickstoffatmosphäre bei 60°C gerührt. Nach Abkühlung der Reaktionsmischung auf Raumtemperatur wurden die beiden flüssigen Phasen getrennt. Aus der oberen Phase wurden nach Abdestillieren des unumgesetzten THF 18 g eines klaren, farblosen viskosen Polymeren der mittleren Molmasse (Mₙ) 2000 erhalten.

## Patentansprüche

1. Verfahren zur Herstellung von Polyoxyalkylenglykol-Monoestern von Monocarbonsäuren mit mittleren Molmassen von 500 bis 3500 Dalton, dadurch gekennzeichnet, daß man Tetrahydrofuran oder Mischungen von Tetrahydrofuran mit insgesamt bis zu 95 Mol-%, bezogen auf die eingesetzte Menge an Tetrahydrofuran, eines oder mehrerer Comonomere aus der Gruppe der cyclischen Ether oder Acetale in Abwesenheit von Wasser und in Gegenwart einer Monocarbonsäure und eines gelösten, wasserfreien Heteropolysäure-Katalysators in einem homogenen flüssigen Zweiphasensystem polymerisiert.

2. Verfahren nach Anspruch 1, dadurch gekennzeichnet, daß man die Polymerisation diskontinuierlich in Gegenwart von 0,1 bis 15 Mol Carbonsäure pro Mol Heteropolysäure durchführt.

3. Verfahren nach Anspruch 1, dadurch gekennzeichnet, daß man die Heteropolysäure in Mengen von 10 bis 300 Gew.-Teilen pro 100 Gew.-Teile des verwendeten Monomers einsetzt.

4. Verfahren nach Anspruch 1, dadurch gekennzeichnet, daß man die Polymerisation bei Temperaturen von 0 bis 150°C ausführt.

5. Verfahren nach Anspruch 1, dadurch gekennzeichnet, daß man die Umsetzung kontinuierlich durchführt und dabei eine Carbonsäurekonzentration von 0,1 bis 15 Mol Carbonsäure pro Mol Heteropolysäure in der Katalysatorphase einstellt.

6. Verfahren nach Anspruch 5, dadurch gekennzeichnet, daß man die Umsetzung in einem mit einem Phasenabscheider kombinierten Rührkessel durchführt.

7. Verfahren nach Anspruch 1, dadurch gekennzeichnet, daß man die Umsetzung mit einem auf einem Träger aufgebrachten Heteropolysäure-Katalysator ausführt.

## Revendications

1. Procédé de préparation de monoesters de polyoxyalkylèneglycols d'acides monocarboxyliques possédant des masses molaires de 500 à 3500 Daltons, caractérisé en ce que l'on polymérise du tétrahydrofuranne, ou des mélanges de tétrahydrofuranne avec au total jusqu'à 95% molaires, par rapport à la quantité de tétrahydrofuranne mise en oeuvre, d'un ou plusieurs comonomères appartenant au groupe des acétals et des éthers cycliques, en l'absence d'eau et en présence d'un acide monocarboxylique et d'un catalyseur à hétéropolyacide dépourvu d'eau, dissous, dans un système biphasé liquide et homogène.

2. Procédé suivant la revendication 1, caractérisé en ce que l'on entreprend la polymérisation de manière discontinue, en présence de 0,1 à 15 moles d'acide carboxylique par mole d'hétéropolyacide.

3. Procédé suivant la revendication 1, caractérisé en ce que l'on utilise l'hétéropolacide en proportions de 10 à 300 parties en poids, par 100 parties en poids du monomère employé.

4. Procédé suivant la revendication 1, caractérisé en ce que l'on entreprend la polymérisation à des températures de 0 à 150°C.

5. Procédé suivant la revendication 1, caractérisé en ce que l'on entreprend la réaction en continu et, dans ce cas, on règle la concentration en acide carboxylique à 0,1-15 moles d'acide carboxylique par mole d'hétéropolyacide dans la phase catalytique.

6. Procédé suivant la revendication 5, caractérisé en ce que l'on entreprend la réaction, dans un récipient agitateur combiné à un séparateur de phases.

7. Procédé suivant la revendication 1, caractérisé en ce que l'on entreprend la réaction, à l'aide d'un catalyseur à hétéropolacide appliqué sur un support.

## Claims

1. A process for the preparation of a polyoxyalkylene glycol monoester of a monocarboxylic acid having an average molecular weight of from 500 to 3500 Dalton, wherein tetrahydrofuran or a mixture of tetrahydrofuran with a total of not more than 95 mol %, based on the amount of tetrahydrofuran used, of one or more comonomers from the group consisting of the cyclic ethers and acetals is polymerized in the absence of water and in the presence of a monocarboxylic acid and of a dissolved, anhydrous heteropolyacid catalyst in a homogeneous liquid two-phase system.

2. A process as claimed in claim 1, wherein the polymerization is carried out batchwise in the presence of from 0.1 to 15 mol of carboxylic acid per mol of the heteropolyacid.

3. A process as claimed in claim 1, wherein the heteropolyacid is used in amounts of from 10 to 300 parts by weight per 100 parts by weight of the monomer used.

4. A process as claimed in claim 1, wherein the polymerization is carried out at from 0 to 150°C.

5. A process as claimed in claim 1, wherein the reaction is carried out continuously and a carboxylic acid concentration of from 0.1 to 15 mol of carboxylic acid per mol of heteropolyacid is established in the catalyst phase.

6. A process as claimed in claim 5, wherein the reaction is carried out in a stirred kettle combined with a phase separator.

7. A process as claimed in claim 1, wherein the reaction is carried out using a heteropolyacid catalyst applied to a substrate.
